# FASCICULE DE BREVET EUROPEEN

(11) **EP 0 717 912 B1**
(45) Date de publication et mention de la délivrance du brevet: **20.05.1998**
(21) Numéro de dépôt: 94926277.8
(22) Date de dépôt: 06.09.1994
(51) Int. Cl.: H04Q 7/18, H04Q 7/10

(54) **PROCEDE POUR AUGMENTER L'AUTONOMIE D'UN RECEPTEUR DE RADIO-MESSAGERIE ET RECEPTEUR CORRESPONDANT**
VERFAHREN ZUM LANGEREN BETRIEB EINES FUNKRUFEMPFANGER UND EMPFANGER HIERZU
METHOD FOR INCREASING THE AUTONOMY OF A RADIO-PAGING RECEIVER, AND CORRESPONDING RECEIVER

(30) Priorité: 09.09.1993 FR 9310745
(43) Date de publication de la demande: 26.06.1996
(73) Titulaire: RDS TECHNOLOGIES, Paris 13ème (FR)
(72) Inventeur: REIBEL, Jean-Michel, F-67450 Lampertheim (FR); BERNHARD, François, Antoine, F-67100 Strasbourg (FR)
(74) Mandataire: Casalonga, Axel
(86) Numéro de dépôt international: FR9401045
(87) Numéro de publication internationale: WO9507594

(56) Documents cités:
- EP-A- 0 319 219
- EP-A- 0 554 941
- US-A- 5 230 084

## Description

L'invention concerne la réception et le traitement d'informations reçues par un récepteur en vue d'augmenter l'autonomie de celui-ci, lesdites informations étant transmises sur un signal porteur au sein d'une pluralité de trames temporelles partitionnées chacune en un nombre prédéterminé d'intervalles dont chacun d'entre eux est alloué à un groupe de récepteurs.

L'invention s'applique avantageusement mais non limitativement à la radio-messagerie (radio-paging). De tels récepteurs fonctionnent par intermittence au cours d'intervalles temporels successifs qui leur sont alloués, et sont dans un état de repos en dehors de ces intervalles pour notamment économiser leur source d'énergie. Ils peuvent recevoir dans leur phase de fonctionnement de simples appels se traduisant par l'émission d'un signal sonore indiquant au possesseur du récepteur que l'on cherche à le contacter. Celui-ci doit alors rappeler un numéro de téléphone prédéterminé. Les récepteurs peuvent également recevoir dans leur phase de fonctionnement des messages alphanumériques qui s'affichent sur leur écran. Tous ces récepteurs sont généralement équipés d'un microprocesseur rapide. En effet, le microprocesseur doit traiter, au cours de l'intervalle de fonctionnement alloué au récepteur et durant lequel celui reçoit les informations transmises, un flot important de données en raison du débit d'informations pouvant varier de 512 bauds à 1200 bauds ou plus. Pendant la durée de cet intervalle de fonctionnement généralement courte, par exemple de l'ordre de 6 secondes, le microprocesseur doit effectuer notamment des traitements de synchronisation, de détection d'erreurs, de correction d'erreurs et de décodage.

La nécessité de prévoir un microprocesseur rapide implique une consommation de courant importante et l'utilisation d'une tension d'alimentation stable et généralement centrée autour de 5 volts. Or, de telles contraintes vont difficilement de pair avec la source d'énergie habituelle de ce genre de récepteur, généralement constituée par un seul élément de pile.

Afin de minimiser la consommation de courant nécessaire au fonctionnement du récepteur, il a été proposé, dans la demande de brevet français publiée sous le n° FR-A-2 699 027 de différer le traitement des données reçues, par rapport à leur réception proprement dite.

On connaît également par la demande de brevet européen n° 0319219. un procédé de radio-messagerie dans lequel les informations sont transmises sur un signal porteur au sein d'un signal de trame répétitif constitué d'un nombre choisi de signaux de groupes, chaque signal de groupe étant alloué à un groupe de récepteurs. Tous les récepteurs d'un groupe sont activés périodiquement lors de l'émission du signal de groupe correspondant. Pour augmenter la durée de vie des batteries des récepteurs, on insère dans le signal de groupe un code spécifique indiquant qu'aucun message n'est destiné au groupe de récepteurs correspondant. Lors de la détection de ce code spécifique tout récepteur dudit groupe se désactive.

L'invention apporte ici une autre solution à ce problème d'autonomie de tels récepteurs.

Telle que revendiquée l'invention propose tout d'abord un procédé pour augmenter l'autonomie d'un récepteur autonome d'informations, en particulier d'un récepteur portable de radio-messagerie, lesdites informations étant transmises sur un signal porteur au sein d'une pluralité de trames temporelles successives partitionnées chacune en un nombre prédéterminé d'intervalles temporels dont chacun est alloué à un groupe prédéterminé de récepteurs; procédé dans lequel on active tous les récepteurs d'un groupe au début de l'intervalle temporel alloué correspondant. Selon l'invention, les récepteurs de chaque groupe sont en outre répartis en un nombre prédéterminé de sous-groupes identifiables de récepteurs, on fait recevoir à tous les récepteurs d'un groupe une information de service identifiant quels sont les sous-groupes dont les récepteurs sont susceptibles de recevoir un message, on analyse cette information de service au sein de chaque récepteur et on désactive avant la fin de l'intervalle temporel alloué correspondant un récepteur n'appartenant pas à l'un des sous-groupes identifiés.

En d'autres termes, selon l'invention, on indique à tous les récepteurs d'un groupe, avantageusement au début de l'intervalle temporel alloué correspondant, les sous-groupes auxquels appartiennent les récepteurs qui sont destinés à recevoir un message au cours de cet intervalle temporel. En conséquence, les récepteurs appartenant aux autres sous-groupes, n'étant pas concernés par cette transmission, peuvent être immédiatement désactivés, c'est-à-dire entrer dans un mode d'économie de batterie ou de repos dans lequel ils n'"écoutent" plus le canal radio-électrique (dans le cas d'une application à la radio-messagerie). De tels récepteurs ne seront alors réactivés qu'à l'occurrence de l'intervalle temporel homologue de la trame suivante. Si l'on suppose que statistiquement les messages sont uniformément répartis sur tous les récepteurs, il est ainsi possible d'augmenter largement l'autonomie des récepteurs.

Généralement, on affecte à chaque récepteur un identifiant unique composé d'une pluralité d'indications, (par exemple un mot numérique composé, en notation décimale, d'une pluralité de chiffres,) dont l'une d'entre elles réalise une correspondance entre le récepteur et son groupe; dans ce cas, il est particulièrement avantageux d'utiliser au moins une indication supplémentaire de l'identifiant pour assurer une correspondance entre le récepteur et son sous-groupe.

On peut également utiliser deux indications supplémentaires de l'identifiant pour assurer ladite correspondance entre le récepteur et son sous-groupe. Ceci permet de sélectionner plus finement les récepteurs concernés par les messages et de laisser "endormis" un plus grand nombre de récepteurs. Néanmoins, dans ce cas, afin de ne pas occuper trop de ressources de transmission sur la fréquence porteuse, les messages éventuels concernant des récepteurs d'une première partie des sous-groupes sont véhiculés au sein de l'intervalle temporel d'une première trame (par exemple chaque trame impaire) tandis que les messages éventuels destinés aux récepteurs de la partie restante des sous-groupes sont véhiculés lors de l'intervalle temporel de la trame suivante (par exemple chaque trame paire).

L'invention a également pour objet un récepteur autonome d'informations, en particulier un récepteur de radio-messagerie, lesdites informations étant transmises sur un signal porteur au sein d'une pluralité de trames temporelles successives partitionnées chacune en un nombre prédéterminé d'intervalles temporels dont chacun est alloué à un groupe prédéterminé de récepteurs, comprenant des moyens de commande aptes à activer le récepteur au début de l'intervalle alloué correspondant de chaque trame pour autoriser le traitement des informations véhiculées sur le signal porteur; selon une caractéristique générale de l'invention, ce récepteur comprend une mémoire contenant une donnée d'identification du récepteur permettant d'associer le récepteur à un sous-groupe prédéterminé de récepteurs à l'intérieur du groupe correspondant; il est également prévu des moyens d'analyse aptes à recevoir, au cours de l'intervalle temporel alloué, une information de service désignant un ou plusieurs sous-groupes et aptes à effectuer un traitement d'analyse de cette information de service compte tenu de la donnée d'identification. Les moyens de commande désactivent alors le récepteur avant la fin de l'intervalle temporel en cas de discordance entre la donnée d'identification et l'information de service. Le terme "discordance" doit être interprété de façon large. Il y aura ainsi discordance entre une donnée d'identification et une information de service lorsque le récepteur associé à cette donnée d'identification n'appartient pas à l'un des sous-groupes désignés par l'information de service.

Les moyens de commande peuvent être aptes à maintenir activés les récepteurs des sous-groupes désignés, pendant toute la durée de l'intervalle temporel. Ils peuvent également désactiver momentanément au cours de cet intervalle temporel, après analyse de l'information de service, les récepteurs de certains au moins des sous-groupes désignés par ladite information de service. C'est le cas notamment lorsque l'intervalle temporel est subdivisé temporellement en sous-intervalles respectivement associés aux différents sous-groupes et destinés à contenir respectivement les messages destinés aux récepteurs des sous-groupes correspondants.

D'autres avantages et caractéristiques de l'invention apparaîtront à l'examen de la description détaillée d'un mode de réalisation et de mise en oeuvre nullement limitatif de l'invention, illustré sur les dessins annexés sur lesquels :
- la figure 1 est un synoptique schématique d'un mode de réalisation d'un récepteur selon l'invention,
- les figures 2 et 3 illustrent un découpage temporel relatif au fonctionnement d'un récepteur selon l'invention,
- la figure 4 illustre un mode de mise en oeuvre de l'invention.

La description détaillée qui va maintenant être faite se rapporte à un récepteur de radio-messagerie utilisant une transmission et une réception de type radio électrique, bien que comme cela a déjà été mentionné ci-avant, les récepteurs selon l'invention peuvent s'appliquer dans d'autres domaines, tel que par exemple l'archivage de dossiers, ou bien encore utiliser d'autres liaisons telles que des liaisons infrarouges.

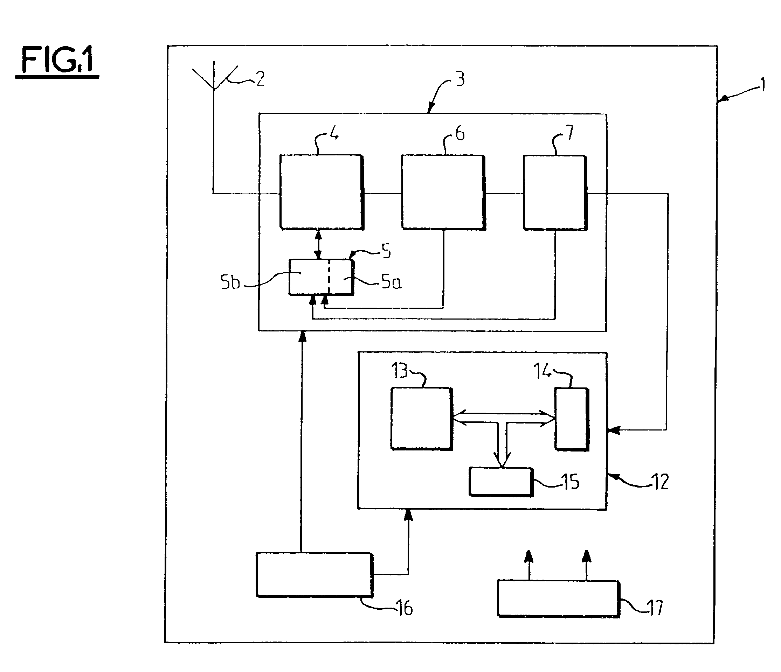

Sur la figure 1, la référence 1 désigne un récepteur de radio-messagerie équipé d'un antenne 2 de réception, connectée à des moyens de réception 3 comportant, en tête, un étage haute fréquence 4 suivi d'un circuit spécifique 6 de détection de perte de synchronisation et d'un circuit spécifique 7 de détection et de correction d'erreurs de transmission. Les moyens de réception 3 comprennent en outre des moyens 5 de détection de fréquence porteuse, coopérant avec l'étage haute fréquence 4, et comportant un discriminateur de fréquence 5a mettant en évidence un désaccord de fréquence de l'oscillateur local, ainsi qu'un circuit spécifique 5b de recherche et de contrôle automatique de la fréquence du signal porteur.

La sortie des moyens de réception est reliée à des moyens d'analyse 12 incorporant un microprocesseur 13, par exemple 4 bits, associé, par l'intermédiaire d'un bus de communication, à une mémoire vive 14, et à une mémoire morte 15.

Des moyens de commande 16 sont aptes à activer momentanément les moyens de réception 3 et les moyens d'analyse 12 en délivrant respectivement à ces deux moyens des impulsions de commande correspondantes. Ces moyens de commande peuvent être incorporés de façon classique au sein même du microprocesseur 13, ou bien peuvent être réalisés par un circuit externe spécifique classique. De même, à l'exception de l'étage d'entrée 4 une partie au moins des moyens de réception peut être fonctionnellement incorporée au sein du microprocesseur et être réalisée de façon logicielle.

L'ensemble du récepteur est alimenté par des moyens d'alimentation 17 comportant un élément de pile associé à un convertisseur continu-continu utilisé pour élever la tension de cet élément de pile à celle nécessaire au fonctionnement du microprocesseur.

Dans la mémoire morte du récepteur est stocké un identifiant unique composé d'une pluralité de chiffres, typiquement six, a, b, c, d, e, f (ayant des valeurs de 0 à 9 en notation décimale). On reviendra plus en détail ci-après sur l'utilisation de certains de ces chiffres.

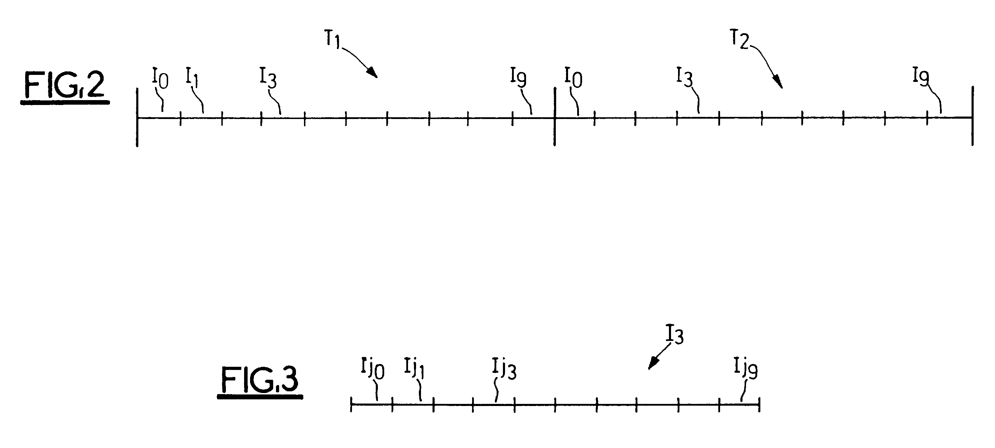

On se réfère maintenant plus particulièrement aux figures 2 à 4 pour décrire le fonctionnement d'un tel récepteur.

Plusieurs normes de transmission réagissent actuellement les transmissions d'informations en radio-messagerie. L'une d'entre elles, est une norme européenne relative au système de radio diffusion de données RDS (Radio Data System) bien connue de l'homme du métier.

D'une façon générale, quelle que soit la norme utilisée, l'invention prévoit que les informations sont transmises sur un signal porteur (radio fréquence dans le cas de la radio-messagerie) au sein d'une pluralité de trames temporelles successives d'une durée-trame prédéterminée. On a représenté sur la figure 2 deux trames temporelles successives T₁ et T₂. Ces trames ont par exemple dans la norme RDS une durée de 1 minute. Chaque trame est partitionnée en un nombre prédéterminé (ici dix) d'intervalles temporels I₀-I₉ dont chacun d'entre eux est alloué à un groupe de récepteurs. L'appartenance d'un récepteur à un groupe donné, et donc l'allocation de l'intervalle temporel correspondant, est déterminé par le dernier chiffre f de l'identifiant.

Plus précisément, tous les récepteurs ayant un identifiant dont le dernier chiffre est f appartiennent au même groupe. Les dix valeurs possibles du chiffre f correspondent aux dix intervalles temporels I₀-I₉.

L'invention prévoit de subdiviser chaque groupe Gᵢde récepteurs en un nombre prédéterminé de sous-groupes SGᵢ. On utilise pour cela avantageusement au moins un chiffre supplémentaire de l'identifiant du récepteur. Il est ainsi possible d'utiliser soit l'avant dernier chiffre e, soit le couple formé par les quatrième et cinquième chiffres de l'identifiant d, e. Dans le premier cas, si l'on suppose que le chiffre e peut prendre les valeurs 0 à 9, on obtient alors pour chaque groupe de récepteurs, dix sous-groupes. L'appartenance d'un récepteur à l'un des sous-groupes est donc conditionnée par la valeur du chiffre e de son identifiant. L'augmentation du nombre des chiffres de l'identifiant pris en compte pour la détermination des sous-groupes permet d'augmenter le nombre des sous-groupes et donc de sélectionner plus finement les récepteurs susceptibles d'être concernés par un message transmis. Cependant, un trop grand nombre de sous-groupes conduirait à une occupation trop importante des ressources de transmission du système. La demanderesse a observé que l'utilisation d'un seul chiffre supplémentaire pour la détermination des sous-groupes permettait déjà un gain appréciable de la consommation en courant, notamment dans le cas de transmission de messages alphanumériques. L'utilisation d'un nombre de chiffres supplémentaires supérieur à deux a été jugé pour l'instant inutile compte tenu de l'occupation trop importante des ressources utilisées vis-à-vis de l'économie de gain réalisé par rapport à l'utilisation de deux chiffres supplémentaires seulement.

On suppose maintenant dans l'exemple décrit que le récepteur concerné appartient au quatrième groupe G₃ associé au quatrième intervalle I₃. On suppose également qu'il appartient au quatrième sous-groupe SG₃.

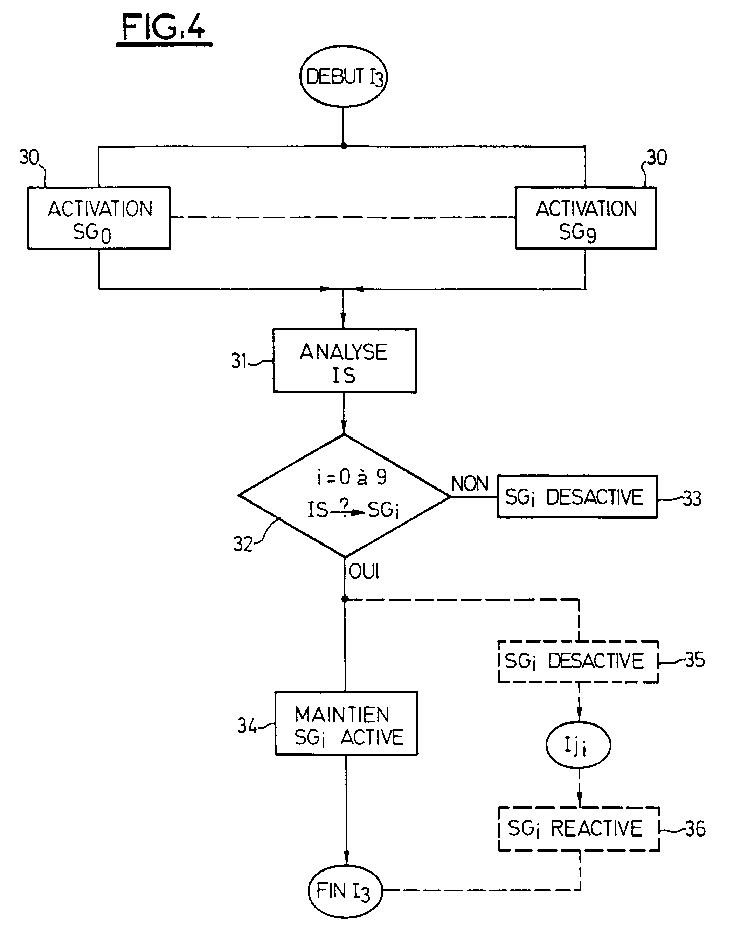

Si l'on se réfère maintenant plus particulièrement à la figure 4, on voit que l'occurrence de l'intervalle I₃ alloué au groupe G₃ de récepteurs provoque l'activation de chaque récepteur du groupe G₃ par les moyens de commande 16 correspondants. On suppose bien entendu tous les récepteurs déjà synchronisés temporellement sur les trames successives. Ainsi, même si aucun message n'est destiné à être transmis, au cours de ce intervalle temporel I₃, à certains récepteurs de certains sous-groupes SG₀-SG₉, tous ces récepteurs sont néanmoins activés, c'est-à-dire "révéillés", pour recevoir et analyser les informations reçues du signal porteur.

L'invention prévoit alors la transmission au cours de cet intervalle temporel I₃, et généralement au début de celui-ci, par exemple après un en-tête spécifique de synchronisation et de contrôle, d'une information de service IS désignant quels sont les sous-groupes dont les récepteurs sont susceptibles de recevoir un message les concernant.

Les moyens d'analyse de chaque récepteur analysent alors (étape 31) le contenu de cette information de service compte tenu de l'identifiant contenu en mémoire. En cas de discordance entre cette information de service et l'identifiant, c'est-à-dire si le ou les chiffres supplémentaires désignant le sous-groupe ne correspondent pas aux désignations contenues dans l'information de service, les moyens de commande 16 de tous les récepteurs de chaque sous-groupe non désigné désactivent le récepteur, et ce, sans attendre la désactivation normale à la fin de l'intervalle temporel alloué qui se produit dans les récepteurs classiques de l'état de la technique (étapes 32 et 33). En d'autres termes ces récepteurs qui n'ont nul besoin de rester activés, c'est-à-dire à l'écoute du canal radio-électrique, peuvent être désactivés rapidement c'est-à-dire juste après l'analyse de l'information de service, de façon à économiser leur moyen d'alimentation.

Dans un mode particulier de mise en oeuvre de l'invention, on peut prévoir que l'information de service IS soit constituée d'un mot de n bits où n est égal au nombre de sous-groupes d'un groupe ou intervalle. Chaque bit est par ailleurs associé de façon biunivoque à un sous-groupe. On peut prévoir d'ordonner de préférence les sous-groupes par rapport à la valeur de leur(s) chiffre(s) supplémentaire(s) et d'ordonner les bits de la même façon. Le premier bit sera alors associé au premier sous-groupe correspondant à e = o et le 10^{e} bit (dans le cas de 10 sous-groupes) sera associé au 10^{e} sous-groupe correspondant à e=9. Le traitement d'analyse de l'information de service par les moyens d'analyse du récepteur va donc comprendre l'analyse de la valeur du bit de rang correspondant à son sous-groupe. Si par exemple ce bit est à 1, le sous-groupe correspondant est désigné. S'il est à zéro le sous-groupe correspondant ne l'est pas.

En ce qui concerne les récepteurs des sous-groupes désignés dans l'information de service, deux variantes sont possibles.

L'une d'entre-elles, illustrée en trait plein sur la figure 4, prévoit le maintien dans l'état actif de tous les récepteurs de tous les sous-groupes ainsi désignés (étape 34) jusqu'à la fin de l'intervalle I₃. Une autre solution, illustrée en tireté sur la figure 4, permet d'économiser encore davantage la consommation de courant de certains des récepteurs. En effet, si l'on prévoit en outre (figure 3) de subdiviser temporellement chaque intervalle temporel en autant de sous-intervalles Ij₀-Ij₉ qu'il y a de sous-groupes, les différents sous-groupes et les sous-intervalles associés étant ordonnés de la même façon, par rapport par exemple à la valeur de leur chiffre supplémentaire e, et si l'on prévoit de transmettre uniquement les messages destinés aux récepteurs d'un sous-groupe dans le sous-intervalle correspondant, il est alors possible (étape 35) de désactiver momentanément les récepteurs d'un sous-groupe SGᵢ dont la réception des messages les concernant n'interviendra qu'au cours de l'intervalle Ijᵢ. Les récepteurs de ce groupe SGᵢ seront alors réactivés uniquement à l'occurrence du sous-intervalle temporel correspondant Ijᵢ.

Concrètement, dans l'exemple décrit, si l'on suppose que les sous-groupes et les sous-intervalles temporels associés sont rangés dans l'ordre croissant correspondant aux valeurs croissantes du chiffre e, le récepteur appartenant au sous-groupe SG₃ pourra être désactivé après réception et analyse de l'information de service IS jusqu'à l'occurrence du quatrième sous-intervalle Ij₃.

Bien entendu, la subdivision des intervalles temporels en sous-intervalles temporels n'est pas liée directement à la désactivation momentanée éventuelle des sous-groupes désignés. En d'autres termes on peut prévoir cette subdivision avec émission des messages concernant les sous-groupes dans les sous-intervalles correspondants, même si les récepteurs des sous-groupes désignés restent activés pendant tout l'intervalle temporel.

Dans le cas où l'on utilise deux chiffres supplémentaires de l'identifiant pour déterminer les sous-groupes, on obtient, avec une notation décimale de 0 à 9 pour chacun des chiffres supplémentaires, cent sous-groupes supplémentaires (de 00 à 99). Cependant, le traitement de ces cent sous-groupes sur un intervalle temporel d'une trame, risquerait de saturer le système de transmission. Aussi, il est prévu avantageusement de répartir ces cent sous-groupes sur deux intervalles temporels homologues de deux trames temporelles successives T₁, T₂ de façon à obtenir fictivement cinquante sous-groupes par intervalle temporel. On peut ainsi envisager lors de chaque trame paire, de n'envoyer des messages qu'à des récepteurs dont les sous-groupes correspondent à des valeurs paires du coupe d, e et de n'envoyer des messages éventuels aux récepteurs des sous-groupes correspondants aux valeurs impaires du couple d, e lors de chaque trame impaire. En pratique, la parité du coupe d, e peut être simplement déterminée par la parité du chiffre e. Dans une telle variante, l'information de service comprendrait un mot de 50 bits.

Par ailleurs, afin d'assurer avantageusement une compatibilité de l'invention avec les récepteurs actuels fonctionnant de façon classique, il est prévu d'affecter de préférence aux récepteurs selon l'invention un identifiant dont l'un au moins des chiffres, par exemple a, est codé en hexadécimal et présente une valeur supérieure à 9. Dans ce cas, et si l'on prévoit de disposer au sein des trames, l'information de service après l'émission des identifiants des récepteurs ou au moins après l'émission du chiffre codé en hexadécimal, les moyens d'analyse des récepteurs classiques, qui ne sont pas capables de reconnaître une adresse supérieure à 9 en hexadécimal, considéreront un tel chiffre comme ne concernant pas leur identifiant, n'analyseront donc pas la trame et ne seront pas perturbés par la présence de l'information de service et des sous-intervalles temporels.

L'invention permet ainsi d'obtenir un gain appréciable en consommation de courant par rapport à une utilisation classique qui prévoit une activation de tous les récepteurs d'un groupe pendant la durée totale de l'intervalle temporel alloué correspondant. Ainsi, dans le cas de dix sous-groupes déterminés par la valeur d'un seul chiffre supplémentaire de l'identifiant (chiffre e par exemple) il est possible d'obtenir, pour une transmission de messages uniquement numériques, au maximum un gain de 90% de consommation de courant dans le cas où tous les messages envoyés concernent un ou plusieurs récepteurs d'un seul et même sous-groupe.

Dans le cas d'une transmission de messages de type alphanumérique, la demanderesse estime que ce gain de consommation de courant peut varier entre 60 et 90% selon les cas.

Dans le cas où l'information de service est relative à deux chiffres supplémentaires de l'identifiant, la demanderesse estime que le gain en consommation de courant, pour une transmission de messages numériques, peut varier entre environ 58% et environ 98% et entre environ 92% et 98% pour une transmission de messages alphanumériques.

## Revendications

1. Procédé pour augmenter l'autonomie d'un récepteur autonome d'informations, en particulier un récepteur portable de radio-messagerie, lesdites informations étant transmises sur un signal porteur au sein d'un pluralité de trames temporelles successives (T₁, T₂) partitionnées chacune en un nombre prédéterminé d'intervalles temporels (I₀-I₉) dont chacun est alloué à un groupe prédéterminé de récepteurs, procédé dans lequel on active (30) tous les récepteurs d'un groupe (G₃) au début de l'intervalle temporel alloué correspondant (I₃), caractérisé par le fait que les récepteurs de chaque groupe étant en outre répartis en un nombre prédéterminé de sous-groupes identifiables de récepteurs (SG₀-SG₉), on fait recevoir à tous les récepteurs d'un groupe (G₃) une information de service (IS) identifiant quels sont les sous-groupes dont les récepteurs sont susceptibles de recevoir un message, on analyse (31) cette information de service au sein de chaque récepteur et on désactive (33), avant la fin dudit intervalle temporel alloué correspondant (I₃) un récepteur n'appartenant pas l'un des sous-groupes désignés.

2. Procédé selon la revendication 1, caractérisé par le fait qu'on désactive (33) un récepteur n'appartenant pas à l'un des sous-groupes désignés juste après l'analyse de l'information de service.

3. Procédé selon la revendication 1 ou 2, dans lequel on affecte à chaque récepteur un identifiant unique composé d'une pluralité d'indications (a, b, c, d, e, f) dont l'une d'entre elles (f) réalise une correspondance entre le récepteur et son groupe, caractérisé par le fait que l'on utilise au moins une indication supplémentaire (e), par exemple deux (d,e), de l'identifiant pour assurer une correspondance entre le récepteur et son sous-groupe.

4. Procédé selon la revendication 3, caractérisé par le fait que l'on utilise deux indications supplémentaires (d,e) de l'identifiant pour assurer ladite correspondance entre le récepteur et son sous-groupe, les messages éventuels concernant des récepteurs d'une première partie des sous-groupes étant véhiculés au sein de l'intervalle temporel (I₃) d'une première trame (T₁), et les messages éventuels concernant les récepteurs de la partie restante des sous-groupes étant véhiculés au sein de l'intervalle temporel homologue (I₃) de la trame suivante (T₂).

5. Procédé selon l'une des revendications précédentes, caractérisé par le fait que l'on utilise comme information de service (IS) un mot de n bits, n étant égal au nombre de sous-groupes, chaque bit étant associé de façon biunivoque à un sous-groupe, et l'analyse de l'information de service au sein de chaque récepteur comporte l'analyse de la valeur du bit associé au sous-groupe auquel appartient le récepteur.

6. Procédé selon l'une des revendications précédentes, caractérisé par le fait que l'on maintient activés (34) les récepteurs des sous-groupes désignés par l'information de service (IS) pendant toute la durée de l'intervalle temporel alloué correspondant.

7. Procédé selon l'une des revendications 1 à 5, caractérisé par le fait que l'on ordonne les sous-groupes à l'intérieur de chaque groupe et l'on associe respectivement aux différents sous-groupes des sous-intervalles temporels (Ijᵢ) respectifs de l'intervalle temporel, ordonnés de la même façon, et à l'intérieur de chacun desquels on transmet les messages éventuels destinés à un ou plusieurs récepteurs du sous-groupe concerné, et par le fait que l'on désactive (35) les récepteurs des sous-groupes désignés (SG₃) par l'information de service jusqu'à l'occurrence des sous-intervalles temporels correspondants (Ij₃).

8. Récepteur autonome d'informations, en particulier récepteur de radio-messagerie, lesdites informations étant transmises sur un signal porteur au sein d'une pluralité de trames temporelles successives partitionnées chacune en un nombre prédéterminé d'intervalles dont chacun est alloué à un groupe prédéterminé de récepteurs, comprenant des moyens de commande (16) aptes à activer le récepteur (1) au début de l'intervalle temporel alloué correspondant (I₃) de chaque trame pour autoriser le traitement des informations véhiculées sur le signal porteur, caractérisé par le fait qu'il comprend une mémoire (15) contenant une donnée d'identification (e) du récepteur permettant d'associer le récepteur (1) à un sous-groupe (SG₃) prédéterminé de récepteurs à l'intérieur du groupe correspondant, et des moyens d'analyse (13) aptes à recevoir au cours de l'intervalle temporel alloué une information de service (IS) désignant un ou plusieurs sous-groupes et à effectuer un traitement d'analyse de cette information de service (IS) compte tenu de la donnée d'identification (e) et par le fait que les moyens de commande (16) désactivent le récepteur (1) avant la fin de l'intervalle temporel (I₃) en cas de discordance entre la donnée d'identification et l'inforrnation de service.

9. Récepteur selon la revendication 8, caractérisé par le fait que les moyens de commande (16) désactivent le récepteur juste après l'analyse de l'information de service en cas de discordance entre la donnée d'identification et l'information de service.

10. Récepteur selon la revendication 8 ou 9, caractérisé par le fait que la mémoire contient un identifiant affecté de façon biunivoque au récepteur, et comportant une pluralité d'indications (a, b, c, d, e, f) dont l'une d'entre elles (f) détermine le groupe, et par le fait que la donnée d'identification est formée d'au moins une indication supplémentaire de l'identifiant, par exemple deux (d, e).

11. Récepteur selon la revendication 8, 9 ou 10, caractérisé par le fait que l'information de service (IS) comporte un mot de n bits, n étant égal au nombre de sous-groupes, chaque bit étant associé de façon biunivoque à un sous-groupe, et par le fait que les moyens d'analyse de chaque récepteur sont aptes à analyser la valeur du bit associé au sous-groupe auquel appartient le récepteur, de façon à déterminée si le récepteur appartient ou non à un sous-groupe désigné.

12. Récepteur selon l'une des revendications 8 à 11, caractérisé par le fait que les moyens de commande (16) sont aptes à maintenir activés les récepteurs des sous-groupes désignés, pendant toute la durée de l'intervalle temporel (I₃).

13. Récepteur selon l'une des revendications 8 à 11, caractérisé par le fait que les moyens de commande (16) sont aptes à désactiver momentanément au cours de l'intervalle temporel, après analyse de l'information de service, les récepteurs de certains au moins des sous-groupes désignés par ladite information de service.

14. Récepteur selon l'une des revendications 8 à 13, caractérisé par le fait que l'une des indications (a) de l'identifiant a une valeur supérieure à 9 et est codée en hexadécimal.

## Patentansprüche

1. Verfahren zur Erhöhung der Unabhängigkeit eines netzunabhängigen Informationsempfängers, insbesondere eines tragbaren Funkrufempfängers, wobei die Informationen auf einem Trägersignal innerhalb aufeinanderfolgender Zeitabschnitte (T₁, T₂) übertragen werden, von denen jeder in eine vorbestimmte Anzahl von Zeitintervallen (I₀-I₉) unterteilt ist, von denen jedes einer vorbestimmten Gruppe von Empfängern zugeordnet ist, bei dem alle Empfänger einer Gruppe (G₃) am Beginn des entsprechenden zugeordneten Zeitintervalls (I₃) aktiviert werden (30),
**dadurch gekennzeichnet, daß**
die Empfänger jeder Gruppe außerdem in eine vorbestimmte Anzahl von identifizierbaron Empfängeruntergruppen (SG₀-SG₉) unterteilt sind, an allen Empfängern einer Gruppe (G₃) eine Service-Information (IS) empfangen wird, die angibt,welche Untergruppen der Empfänger in der Lage sind, eine Meldung zu empfangen, diese Service-Information in jedem Empfänger analysiert wird (31), und vor dem Ende des entsprechenden zugeordneten Zeitintervalls (I₃) ein Empfänger, der nicht zu einer der bezeichneten Untergruppen gehört, deaktiviert wird.

2. Verfahren nach Anspruch 1,
**dadurch gekennzeichnet, daß**
ein Empfänger, der nicht zu einer der bezeichneten Untergruppen gehört, unmittelbar nach der Analyse der Service-Information deaktiviert wird (33).

3. Verfahren nach Anspruch 1 oder 2, bei dem jedem Empfänger eine bestimmte Kennzeichnung zugeordnet wird, die aus mehreren Hinweisen (a, b, c, d, e, f) zusammengesetzt ist, von denen einer (f) eine Zuordnung zwischen dem Empfänger und seiner Gruppe darstellt,
**dadurch gekennzeichnet, daß**
wenigstens ein zusätzlicher Hinweis (e), z.B. zwei (d, e) der Kennzeichnung, verwendet wird, um eine Zuordnung zwischen dem Empfänger und seiner Untergruppe zu bezeichnen.

4. Verfahren noch Anspruch 3,
**dadurch gekennzeichnet, daß**
zwei zusätzliche Hinweise (d, e) der Kennzeichnung verwendet werden, um die Zuordnung zwischen dem Empfänger und seiner Untergruppe sicherzustellen, wobei die möglichen Meldungen, die Empfänger eines ersten Teils von Untergruppen betreffen, im Zeitintervall (I₃) eines ersten Abschnitts (T₁) transportiert werden, und die möglichen Meldungen, die Empfänger des restlichen Teils von Untergruppen betreffen, im entsprechenden Zeitintervall (I₃) des folgenden Abschnittes (T₂) transportiert werden.

5. Verfahren nach einem der vorhergehenden Ansprüche,
**dadurch gekennzeichnet, daß**
als Service-Information (IS) ein Wort aus n Bits verwendet wird, wobei n gleich der Anzahl von Untergruppen ist, jedes Bit eindeutig einer Untergruppe zugeordnet ist, und die Analyse der Service-Information in jedem Empfänger die Analyse des Wertes des Bits umfaßt, das der Untergruppe zugeordnet ist, zu der der Empfänger gehört.

6. Verfahren nach einem der vorhergehenden Ansprüche,
**dadurch gekennzeichnet, daß**
die Empfänger der durch die Service-Information (IS) bezeichneten Untergruppen während der gesamten Dauer des entsprechenden zugeordneten Zeitintervalls aktiviert gehalten werden.

7. Verfahren nach einem der Ansprüche 1 - 5,
**dadurch gekennzeichnet, daß**
die Untergruppen in jeder Gruppe geordnet werden, und jeweils verschiedenen Untergruppen jeweilige Unterzeitintervalle (Ijᵢ) des Zeitintervalls zugeordnet werden, die in der gleichen Weise geordnet sind, und in jedem dieser die möglichen Meldungen, die für einen oder mehrere Empfänger der betreffenden Untergruppe bestimmt sind, übertragen werden, und die Empfänger der durch die Service-Information bezeichneten Untergruppen (SG₃) unmittelbar bis zum Auftreten der entsprechenden Unterzeitintervalle (lj₃) deaktiviert werden (35).

8. Netzunabhängiger Informationsempfänger, insbesondere Funkrufempfänger, wobei die Informationen auf einem Trägersignal in aufeinanderfolgenden Zeitabschnitten übertragen werden, von denen jeder in eine vorbestimmte Anzohl von Intervallen unterteilt ist, von denen jedes einer vorbestimmten Gruppe von Empfängern zugeordnet ist, bestehend aus Steuereinrichtungen (16), die den Empfänger am Beginn des entsprechenden zugeordneten Zeitintervalls (I₃) jedes Abschnitts aktivieren können, um die Verarbeitung der Införmationen befehlen zu können, die auf dem Trägersignal transportiert werden,
**gekennzeichnet durch**
einen Speicher (15), der eine Identifizierungsgröße (e) des Empfängers enthält, die eine Zuordnung des Empfängers (1) zu einer vorbestimmten Untergruppe (SG₃) von Empfängern innerhalb der entsprechenden Gruppe ermöglicht, und Analyseeinrichtungen (13), die innerhalb des zugeordneten Zeitintervalls eine Service-Information (IS) empfangen können, die eine oder mehrere Untergruppen bezeichnet, und eine Analyseverarbeitung dieser Service-Information (IS) unter Berücksichtigung der Identifizierungsgröße (e) durchführen können, und dadurch, daß die Steuereinrichtungen (16) den Empfänger vor dem Ende des Zeitintervalls (I₃) im Falle eine Nichtübereinstimmung zwischen der Identifizierungsgröße und der Service-Information deaktivieren.

9. Empfänger nach Anspruch 8,
**dadurch gekennzeichnet, daß**
die Steuereinrichtungen (16) den Empfänger unmittelbar nach der Analyse der Service-Information im Falle einer Nichtübereinstimmung zwischen der Identifizierungsgröße und der Service-Information deaktivieren.

10. Empfänger nach Anspruch 8 oder 9,
**dadurch gekennzeichnet, daß**
der Speicher eine Kennzeichnung enthält, die einem Empfänger eindeutig zugeordnet ist und die mehrere Hinweise (a, b, c, d, e f) enthält, von denen einer (f) die Gruppe bestimmt, und daß die Identifizierungsgröße aus wenigstens einem zusätzlichen Identifizierungshinweis, z.B. zwei (d, e), gebildet ist.

11. Empfänger nach Anspruch 8, 9 oder 10,
**dadurch gekennzeichnet, daß**
die Service-Information (IS) ein Wort aus n Bits umfasst, wobei n gleich der Anzahl der Untergruppen ist, jedes Bit einer Untergruppe eindeutig zugeordnet ist, und daß die Analyseeinrichtungen jedes Empfängers in der Lage sind, die Größe des der Untergruppe, zu der der Empfänger gehört, zugeordneten Bits derart zu analysieren, daß bestimmt wird, ob der Empfänger zu einer bezeichneten Untergruppe gehört oder nicht.

12. Empfänger nach einem der Ansprüche 8 - 11,
**dadurch gekennzeichnet, daß**
die Steuereinrichtungen (16) die Empfänger von bezeichneten Untergruppen während der gesamten Dauer des Zeitintervalls (I₃) aktiviert halten können.

13. Empfänger nach einem der Ansprüche 8 - 11,
**dadurch gekennzeichnet, daß**
die Steuereinrichtungen (16) im Laufe des Zeitintervalls nach der Analyse der Service-Information die Empfänger wenigstens bestimmter durch die Service-Information bezeichneter Untergruppen momentan deaktivieren können.

14. Empfänger nach einem der Ansprüche 8 - 13,
**dadurch gekennzeichnet, daß**
einer (a) der Hinweise der Kennzeichnung einen Wert höher als 9 hat und hexadezimal dekodiert wird.

## Claims

1. Method for increasing the endurance of a free-standing information receiver, particularly a portable radio-paging receiver, the said information being transmitted on a carrier signal within a plurality of successive time frames (T₁, T₂) each partitioned into a predetermined number of time intervals (I₀-I₉) each of which is allotted to a predetermined group of receivers, a method in which all the receivers of a group (G3) are activated (3c) at the start of the corresponding allotted time interval (I3), characterized in that, the receivers of each group being furthermore distributed into a predetermined number of identifiable sub-groups of receivers (SG₀-SG₉), all the receivers of a group (G3) are made to receive service information (IS) identifying which are the sub-groups in which the receivers are likely to receive a message, this service information is analysed (31) within each receiver and, before the end of the said corresponding allotted time interval (I₃), a receiver not belonging to one of the designated sub-groups is de-activated (33).

2. Method according to Claim 1, characterized in that a receiver not belonging to one of the designated sub-groups is deactivated (33) just after the analysis of the service information.

3. Method according to Claim 1 or 2, in which each receiver is allocated a unique identifier consisting of a plurality of information items (a, b, c, d, e, f), one of which (f) produces a correspondence between the receiver and its group, characterized in that at least one additional information item (e), for example two (d, e), of the identifier are used to form a correspondence between the receiver and its sub-group.

4. Method according to Claim 3, characterized in that two additional information items (d, e) of the identifier are used to form the said correspondence between the receiver and its sub-group, the possible messages concerning receivers of a first part of the sub-groups being transported within the time interval (I₃) of a first frame (T₁), and the possible messages concerning the receivers of the remaining part of the sub-groups being transported within the corresponding time interval (I₃) of the following frame (T₂).

5. Method according to one of the preceding claims, characterized in that an n-bit word is used as service information (IS), n being equal to the number of sub-groups, each bit being associated in a one-to-one way with a sub-group, and the analysis of the service information within each receiver includes the analysis of the value of the bit associated with the sub-group to which the receiver belongs.

6. Method according to one of the preceding claims, characterized in that the receivers of the sub-groups designated by the service information (IS) are kept activated (34) throughout the duration of the corresponding allotted time interval.

7. Method according to one of Claims 1 to 5, characterized in that the sub-groups are ordered within each group, and, with the various sub-groups, there are respectively associated respective time sub-intervals (Ijᵢ) of the time interval, ordered in the same way, and within each of which the possible messages are sent, intended for one or more receivers of the sub-group concerned, and in that the receivers of the sub-groups designated (SG₃) by the service information are de-activated (35) until the corresponding time subintervals (Ij₃) occur.

8. Free-standing information receiver, particularly radio-paging receiver, the said information being transmitted on a carrier signal within a plurality of successive time frames each partitioned into a predetermined number of intervals, each of which is allotted to a predetermined group of receivers, comprising control means (16) able to activate the receiver (1) at the start of the corresponding allotted time interval (I₃) of each frame in order to authorize processing of the information transported on the carrier signal, characterized in that it comprises a memory (15) containing data for identification (e) of the receiver making it possible to associate the receiver (1) with a predetermined sub-group (SG₃) of receivers within the corresponding group, and analysis means (13) able, in the course of the allotted time interval, to receive service information (IS) designating one or more sub-groups and to carry out analysis processing of this service information (IS) having regard to the identification data (e), and in that the control means (16) de-activate the receiver (1) before the end of the time interval (I₃) in the event of disagreement between the identification data and the service information.

9. Receiver according to Claim 8, characterized in that the control means (16) de-activate the receiver just after the analysis of the service information in the event of disagreement between the identification data and the service information.

10. Receiver according to Claim 8 or 9, characterized in that the memory contains an identifier allocated in a one-to-one way to the receiver, and including a plurality of information items (a, b, c, d, e, f) one of which (f) determines the group, and in that the identification data is formed from at least one additional information item of the identifier, for example two (d, e).

11. Receiver according to Claim 8,9 or 10, characterized in that the service information (IS) includes an n-bit word, n being equal to the number of sub-groups, each bit being associated in a one-to-one way with a sub-group, and in that the analysis means of each receiver are able to analyse the value of the bit associated with the sub-group to which the receiver belongs, so as to determined [sic] whether the receiver belongs to a designated sub-group or not.

12. Receiver according to one of Claims 8 to 11, characterized in that the control means (16) are able to keep the receivers of the designated sub-groups activated, throughout the duration of the time interval (I₃).

13. Receiver according to one of Claims 8 to 11, characterized in that the control means (16) are able, in the course of the time interval, after analysis of the service information, momentarily to de-activate the receivers of at least some of the sub-groups designated by the said service information.

14. Receiver according to one of Claims 8 to 13, characterized in that one of the information items (a) of the identifier has a value greater than 9 and is coded in hexadecimal.
